# EUROPÄISCHE PATENTANMELDUNG

(11) **EP 1 151 655 A1**
(43) Veröffentlichungstag der Anmeldung: **07.11.2001**
(21) Anmeldenummer: 01109096.6
(22) Anmeldetag: 12.04.2001
(51) Int. Cl.: A01D 45/02, A01D 43/08, A01D 67/00

(54) **Selbstfahrende Erntemaschine, insbesondere Feldhäcksler**

(30) Priorität: 04.05.2000 DE 20007994 U
(71) Anmelder: Maschinenfabrik Bernard Krone GmbH, 48480 Spelle (DE)
(72) Erfinder: Krone, Bernard, Dr.-Ing. E.h., 48480 Spelle (DE); Berth, Dieter, Dipl.-Ing., 01844 Neustadt (DE); Radke, Karl-Heinz, Dipl.-Ing., 02681 Wilthen (DE)
(74) Vertreter: Busse & Busse Patentanwälte

(57) **Zusammenfassung**

Die selbstfahrende Erntemaschine, insbesondere Feldhäcksler, zum Aufnehmen und Häckseln von Erntegut wie Mais, Grüngut od.dgl. umfaßt ein Fahrgestell, dessen Maschinenrahmen (1) sich über Antriebsräder (2) einer Vorderachse (3) und im Abstand zu diesen nachgeordnete Lenkräder (4) einer Hinterachse (5) auf dem Boden abstützt, sowie Aufbaukomponenten wie Fahrzeugkabine (20), Vorsatzgeräteadapter (6), Guteinzugsvorrichtung (7), insbesondere Häckselaggregat (8), Wurfgebläse (17), Hauptantriebsmotor (10), Tanks (14,15) u.dgl., die auf dem Maschinenrahmen (1) abgestützt sind. Sämtliche Bestandteile der Erntemaschine haben dabei eine Anordnung zueinander, bei der der Schwerpunkt (S) der betriebsbereiten Gesamtmaschine einschließlich Vorsatzgerät (21) in Fahrtrichtung in einem Abstand (s) hinter der Vorderachse (3) von mehr als 20 % des Achsabstandes (I) und dabei in einer Höhe (h) über der Bodenebene (22) gelegen ist, die 45 % des Achsabstandes (I) nicht überschreitet.

## Beschreibung

Die Erfindung betrifft eine selbstfahrende Erntemaschine, insbesondere einen selbstfahrenden Feldhäcksler, in einer Ausbildung gemäß dem Oberbegriff des Anspruchs 1.

Die Erfindung befaßt sich mit dem Problem, eine Maschine dieser Art zu schaffen, die trotz ihrer großen, durch ein Vorsatzgerät zusätzlich vergrößerten Gesamtmasse im Straßenverkehr zulässigerweise mit hoher Verfahrgeschwindigkeit ohne zusätzliche Ballastgewichte bewegt werden kann. Die Erfindung löst diese Aufgabe mit einer Maschine mit den Merkmalen des Anspruchs 1. Hinsichtlich wesentlicher Ausgestaltungen wird auf die Ansprüche 2 bis 5 verwiesen.

Die Maschine nach der Erfindung stellt sicher, daß auch bei hohen Fahrgeschwindigkeiten mit angebautem Vorsatzgerät die Maschine sicher beherrschbar bleibt und insbesondere unter allen Betriebszuständen die Betriebssicherheit gewährleistet ist. Auch bei Bremsvorgängen bleibt die Lenkbarkeit der betriebsbereiten Maschine bishin zu Höchstgeschwindigkeiten von etwa 40 km/h selbst bei unebenem Untergrund und hoher Gesamtmasse der Maschine einwandfrei erhalten.

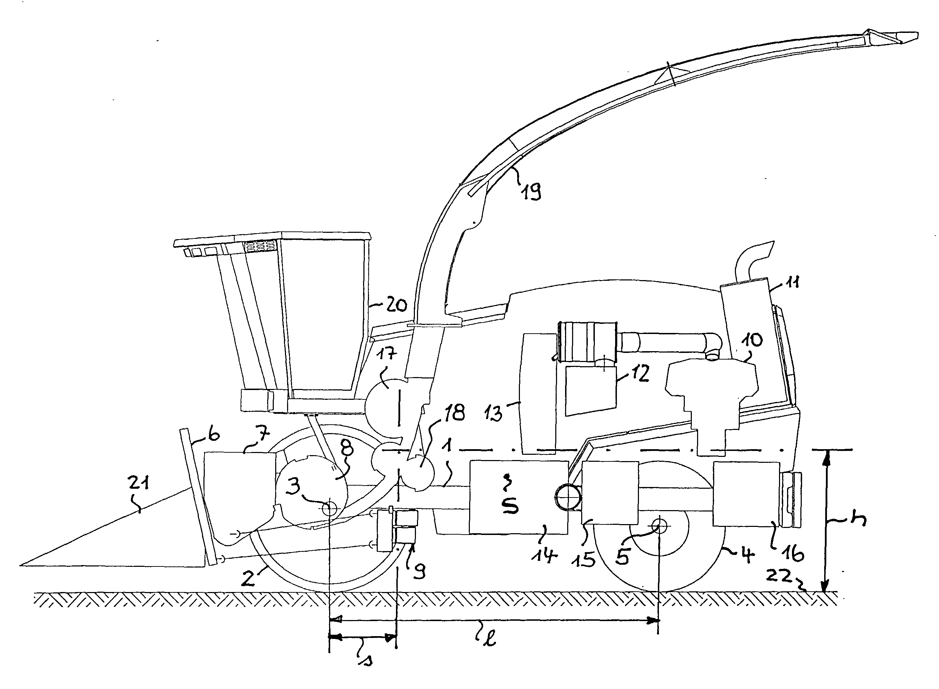

Weitere Einzelheiten und Wirkungen der Erfindung ergeben sich aus der nachfolgenden Beschreibung und der Zeichnung, in der ein Ausführungsbeispiel des Gegenstands der Erfindung in einer schematischen Seitenansicht näher veranschaulicht ist.

Die in der Zeichnung veranschaulichte selbstfahrende Erntemaschine ist als Feldhäcksler ausgebildet, kann jedoch grundsätzlich auch als Mähdrescher, Kartoffelerntemaschine od.dgl. ausgeführt sein.

Die Maschine umfaßt im einzelnen ein Fahrgestell mit einem Maschinen- bzw. Fahrgestellrahmen 1, der sich über Antriebsräder 2 einer Vorderachse 3 und über Lenkräder 4 einer Hinterachse 5 auf dem Boden abstützt, die bevorzugt als höhenbeweglich und gegenüber dem Maschinenrahmen 1 federnd abgestützte Pendelachse ausgebildet ist. Eine solche Abstützung kann beispielsweise mit Hilfe einer nicht dargestellten Querschwinge verwirklicht werden, an deren Unterseite der Achskörper pendelbar gelagert ist und die sich an ihrem freien Ende über Federn zum Maschinenrahmen 1 hin abstützt.

Die dargestellte Maschine umfaßt eine Vielzahl von den Gesamtschwerpunkt S er Maschine bestimmenden Komponenten, zu denen insbesondere ein Vorsatzgeräteadapter 6, eine Guteinzugsvorrichtung 7, eine Gutbearbeitungsvorrichtung 8, im vorliegenden Falle eine Häckselvorrichtung, ein Antriebsaggregat 9, ein Hauptantriebsmotor 10 mit Auspuffvorrichtung 11, Luftfiltervorrichtung 12 und Kühlaggregat 13 gehören. Ferner gehören zu den Komponenten Kraftstofftanks 14,15 ein Zusatzmittel-, insbesondere Siliermitteltank 16 sowie bei der Ausbildung als Feldhäcksler ein Wurfgebläse 17 mit vorgeordnetem Corn-Cracker 18 und Wurfvorrichtung 19. Schließlich gehören zu diesen Komponenten auch noch eine Fahrerkabine 20 und zur betriebsbereiten Maschine ein Vorsatzgerät 21, beispielsweise in Gestalt eines Maisgebisses.

Sämtliche Bestandteile der Erntemaschine haben eine Anordnung zueinander, bei der der Schwerpunkt S der betriebsbereiten Gesamtmaschine einschließlich Vorsatzgerät 21 in Fahrtrichtung in einem Abstand s hinter der Vorderachse 3 angeordnet ist, der mehr als 20 % des Achsabstandes I zwischen den Achsen 3,5 beträgt. Dabei ist der Schwerpunkt S in einer Höhe h über der Bodenebene 22 gelegen, die 45 % des Achsabstandes I nicht überschreitet. Diese Grenzwerte sind jeweils durch eine strichpunktierte Linie in der Zeichnung angedeutet. In der Zeichnung ist auch ein Schwerpunkt S angedeutet, der jedoch nur als Beispiel zu verstehen und nicht als konkrete Artangabe des effektiven Schwerpunktes der dargestellten Maschine anzusehen ist.

Im einzelnen wird die gewünschte Lage des Schwerpunktes S innerhalb des von den Werten s und h begrenzten Bereiches dadurch herbeigeführt, daß die Guteinzugs- und die Gutbearbeitungsvorrichtung 7,8 mit dem Adapter 6 unmittelbar der Vorderachse 3 vorgeordnet sind, wobei das Antriebsaggregat 9 für die Guteinzugsvorrichtung 7 und das Vorsatzgerät 21 hinter die Vorderachse 3 angebracht ist. Der Hauptantriebsmotor 10 mit Auspuffvorrichtung 11 und der Zusatzmitteltank 16 haben eine Anordnung hinter der Hinterachse 5 gefunden, während die Kraftstofftanks 15,16 bei Anordnung in Höhe des Maschinenrahmens 1 unmittelbar vor der Hinterachse 5 angeordnet sind. Auch das Kühlaggregat 13, und die Luftfiltereinrichtung sind unmittelbar vor der Hinterachse 5 angeordnet. Das Wurfgebläse 17 schließlich mit vorgeordnetem Corn-Cracker 18 befindet sich dicht hinter der Vorderachse 3 und unmittelbar oberhalb des Maschinenrahmens 1. Bei derart zielgerichteter Anordnung der insgesamt vorhandenen Komponenten ist eine Lage des Schwerpunktes S im eingegrenzten Bereich ohne weiteres verwirklichbar.

Die Erntemachine nach der Erfindung kann in betriebsbereitem Zusatz mit angebautem Vorsatzgerät 21 trotz einer Gesamtmasse von mehr als 15t sicher im Bereich bis etwa 40 km/h verfahren werden, da der Bodenkontakt der Lenkräder 4 auch beim Bremsen zuverlässig erhalten bleibt. Hieran wirkt auch die abgefederte Hinterachse 5 mit, die den sicheren Bodenkontakt der Lenkräder 4 auch bei erheblichen Bodenunebenheiten begünstigt und der Maschine insgesamt einen besonderen ruhigen Lauf sichert. Trotz des großen Geschwindigkeitsbereiches, in dem sich die Erntemaschine zulässigerweise bewegen kann, bedarf es keines Anbaus von zusätzlichen Ballastgewichten, die überlicherweise an der Rückseite der Maschine sonst angebracht werden müssen, das Gesamtgewicht der Maschine unnötigt erhöhen und wieder abgebaut werden müssen, wenn die Maschine ohne Vorsatzgerät 21 verfahren wird.

## Patentansprüche

1. Selbstfahrende Erntemaschine, insbesondere Feldhäcksler, zum Aufnehmen und Häckseln von Erntegut wie Mais, Grüngut od.dgl., mit einem Fahrgestell, dessen Maschinenrahmen (1) sich über Antriebsräder (2) einer Vorderachse (3) und im Abstand zu diesen nachgeordnete Lenkräder (4) einer Hinterachse (5) auf dem Boden abstützt, und mit Aufbaukomponenten wie Fahrzeugkabine (20), Vorsatzgeräteadapter (6), Guteinzugsvorrichtung (7), Gutbearbeitungsvorrichtungen (8), insbesondere Häckselaggregat, Wurfgebläse (17) mit Wurfvorrichtung (19), Hauptantriebsmotor (10) mit Luftfilter (12) und Kühlaggregat (13), Tanks (14,15) u.dgl., die auf dem Maschinenrahmen (1) abgestützt sind, **dadurch gekennzeichnet, daß** sämtliche Bestandteile der Erntemaschine eine Anordnung zueinander haben, bei der der Schwerpunkt (S) der betriebsbereiten Gesamtmaschine einschließlich Vorsatzgerät (21) in Fahrtrichtung in einem Abstand (s) hinter der Vorderachse (3) von mehr als 20 % des Achsabstandes (I) und dabei in einer Höhe (h) über der Bodenebene (22) gelegen ist, die 45 % des Achsabstandes (I) nicht überschreitet.

2. Maschine nach Anspruch 1, **dadurch gekennzeichnet, daß** die Guteinzugs- und Gutbearbeitungsvorrichtung (7,8) unmittelbar vor der Vordersachse (3), das Antriebsaggregat (9) für die Guteinzugsvorrichtung (7) und das Vorsatzgeräte (21) jedoch hinter der Vorderachse (3) angeordnet ist.

3. Maschine nach Anspruch 1 oder 2, **dadurch gekennzeichnet, daß** der Hauptantriebsmotor (10) samt Auspuffeinrichtung (11) und ein Zusatzmitteltank hinter der Hinterachse (5), die Kraftstofftanks (14,15), das Kühlaggregat (13) und die Luftfiltervorrichtung (12) unmittelbar vor der Hinterachse (5) angeordnet sind.

4. Maschine nach einem der Ansprüche 1 bis 3, **dadurch gekennzeichnet, daß** das Wurfgebläse (17) mit vorgeordnetem Corn-Cracker (18) unmittelbar hinter der Vorderachse (3) und dicht oberhalb des Maschinenrahmens (1) angeordnet sind.

5. Maschine nach einem der Ansprüche 1 bis 4, **dadurch gekennzeichnet, daß** als Hinterachse (5) eine höhenbeweglich abgestützte, gegenüber dem Maschinenrahmen (1) abgefederte Pendelachse vorgesehen ist.
